# EUROPÄISCHE PATENTSCHRIFT

(11) **EP 3 601 017 B1**
(45) Veröffentlichungstag und Bekanntmachung des Hinweises auf die Patenterteilung: **12.05.2021**
(21) Anmeldenummer: 18715558.5
(22) Anmeldetag: 23.03.2018
(51) Int. Cl.: B62D 29/00, B62D 33/04

(54) **KABINENMODUL SOWIE DAMIT AUSGESTATTETES KRAFTFAHRZEUG**
CABIN MODULE AND MOTOR VEHICLE EQUIPPED WITH SAME
MODULE DE CABINE ET VÉHICULE AUTOMOBILE ÉQUIPÉ DUDIT MODULE DE CABINE

(30) Priorität: 24.03.2017 AT 502392017
(43) Veröffentlichungstag der Anmeldung: 05.02.2020
(73) Patentinhaber: Rosenbauer International AG, 4060 Leonding Oberösterreich (AT)
(72) Erfinder: DANILO, Kmetec, 2000 Maribor (SI)
(74) Vertreter: Burger, Hannes
(86) Internationale Anmeldenummer: PCT/EP2018/057471
(87) Internationale Veröffentlichungsnummer: WO 2018/172530

(56) Entgegenhaltungen:
- WO-A1-2015/035455
- WO-A2-2009/058003
- DE-A1-102008 005 010
- DE-U1-202010 011 050

## Beschreibung

Die Erfindung betrifft ein Kabinenmodul in Form eines selbsttragenden Baukörpers sowie ein mit einem derartigen Kabinenmodul ausgestattetes Kraftfahrzeug.

Die US 3,496,689 A sowie die US 3,903,663 A beschreiben jeweils eine Abdeckung für eine Ladefläche eines Kraftfahrzeugs aus einer durchgängigen Sandwichplatte durch Ausbilden einer V-förmigen Nut und Umbiegen entlang der hergestellten Nut. Die Sandwichplatte weist eine an einer Kernlage befestigte Innenlage sowie eine Außenlage auf. Ausgehend von der Innenlage wird in Richtung auf die Außenlage die V-förmige Nut hergestellt und dabei die Außenlage undurchtrennt und durchgängig belassen. Die so ausgebildete Abdeckung weist mehrere Wände, nämlich eine Dachwand, zwei von dieser frei abstehende Seitenwände sowie in einem Übergangsbereich jeweils zwischen einer Seitenwand und der Dachwand eine im Querschnitt gesehen geneigt verlaufende Übergangswand, auf. Die Seitenwände sind jeweils in Fahrtrichtung gesehen an seitlich der Ladefläche aufragenden Karosserieteilen abgestützt und können an diesen auch befestigt sein. Nachteilig dabei ist, dass zur Erzielung der Formstabilität der Abdeckung stets ein die Last der Abdeckung aufnehmender Karosserieteil notwendig war. Dokument DE202010011050U1 zeigt den Oberbegriff des unabhängigen Anspruchs.

Aufgabe der vorliegenden Erfindung war es, die Nachteile des Standes der Technik zu überwinden und ein Kabinenmodul in Form eines selbsttragenden Baukörpers zur Verfügung zu stellen, mittels derer ein einfacherer Fahrzeugaufbau realisiert werden kann. Weiters soll auch noch ein mit einem derartigen Kabinenmodul ausgestattetes Fahrzeug, insbesondere ein Kraftfahrzeug, geschaffen werden.

Diese Aufgabe wird durch das Kabinenmodul sowie das damit ausgestattete Kraftfahrzeug gemäß den Ansprüchen gelöst.

Das erfindungsgemäße Kabinenmodul ist in Form eines selbsttragenden Baukörpers ausgebildet und dient insbesondere als Mannschaftskabine für den Transport von darin aufzunehmenden Personen in einem Kraftfahrzeug, wie einem Einsatzfahrzeug, Feuerwehrfahrzeug, Feuerlöschfahrzeug, Kommunalfahrzeug oder einem Transportfahrzeug. Das Kabinenmodul kann zumindest nachfolgend angeführte Komponenten umfassen:
- mehrere Wände, die einen Kabinenraum zumindest bereichsweise umgrenzen, wobei
- die Wände jeweils eine dem Kabinenraum zugewendete Innenlage und eine davon distanziert angeordnete Außenlage umfassen, und
- die einzelnen Wände aus einem zusammenhängenden Zuschnitt mit einem ersten Endabschnitt und einem in Längserstreckung des Zuschnitts davon distanziert angeordneten zweiten Endabschnitt gebildet sind, wobei
- in Eckbereichen von unmittelbar aufeinanderfolgend angeordneten Wänden die Außenlage jeweils durchlaufend und umgeformt zwischen jeweils unmittelbar aufeinanderfolgend angeordneten Wänden ausgebildet ist und die Innenlage zwischen den jeweils unmittelbar aufeinanderfolgend angeordneten Wänden von einem Trennabschnitt unterbrochen sowie bezüglich der umgeformten Außenlage dazu gekürzt ausgebildet ist, und dabei
- zumindest eine erste Seitenwand, eine Bodenwand, eine zweite Seitenwand sowie eine Dachwand vorgesehen sind, welche Wände aus dem zusammenhängenden Zuschnitt gebildet sind,
- der erste Endabschnitt des Zuschnitts in einem Stoßbereich mit dem zweiten Endabschnitt des Zuschnitts verbunden ist, und
- die Wände den selbsttragenden Baukörper in Form eines Hohlkörpers ausbilden.

Der dadurch erzielte Vorteil liegt darin, dass durch die im Querschnitt und damit über den Umfang bezüglich des Hohlkörpers zusammenhängenden Wände so ein stabiler und in sich selbst tragender Baukörper zur Bildung des Kabinenmoduls geschaffen werden kann. Dadurch, dass die Wände selbst bereits aus einer Innenlage und einer davon distanziert angeordneten Außenlage gebildet sind, weisen diese schon selbst eine hohe Eigensteifigkeit auf. Durch das Heraustrennen von eigenen Trennabschnitten im Bereich der Innenlage und dem durchlaufenden Beibehalten der Außenlage kann so aus einem zuerst ebenflächigen, zusammenhängenden Zuschnitt durch das Aufrichten der Wände zueinander ein stabiler und einfach herzustellender Baukörper als tragende Basiskonstruktion des Kabinenmoduls geschaffen werden. Durch das gegenseitige Verbinden der in Längserstreckung des Zuschnitts in der gestreckten Lage voneinander distanziert angeordneten Endabschnitten kann auch im gegenseitigen Verbindungsbereich der beiden Endabschnitte ein stabiler Zusammenhalt des Baukörpers erzielt werden. Durch die jeweilige Lage und Wahl der Trennabschnitte zueinander können einfach die Abmessungen des Kabinenmoduls an die jeweiligen Erfordernisse angepasst werden. Es ist lediglich eine ausreichende gestreckte Länge des Zuschnitts zur Bildung des Kabinenmoduls bereitzustellen und in Abhängigkeit von den herzustellenden Wandabmessungen die jeweiligen Trennabschnitte im Bereich der Innenlage in den Zuschnitt einzuarbeiten. Der Zuschnitt bleibt stets in seiner Längserstreckung zwischen den beiden Endabschnitten ein zusammenhängender Bauteil, aus welchem die umlaufenden Wände des Kabinenmoduls gebildet werden können. Damit kann der gegenseitige Aufrichtaufwand und/oder gegenseitige Ausrichtaufwand beim Zusammensetzen der Wände zum Kabinenmodul wesentlich reduziert werden, da lediglich die Wände zueinander in die vorgegebene Winkelposition zueinander verbracht werden müssen.

Weiters kann es vorteilhaft sein, wenn der Stoßbereich der beiden einander zugewendeten Endabschnitte in einem der Eckbereiche des selbsttragenden Baukörpers angeordnet ist. Durch das Anordnen des Stoßbereichs in einem der Eckbereiche kann auch hier eine einfache gegenseitige Verbindung der jeweils einander zugewendeten Endabschnitte des Zuschnitts zum hohlkörperförmig oder rohrförmig ausgebildeten Baukörper erfolgen.

Eine andere Ausführungsform zeichnet sich dadurch aus, dass der Trennabschnitt der Innenlage in senkrechter Richtung bezüglich der Längserstreckung des Zuschnitts zwischen seinen beiden Endabschnitten verlaufend ausgerichtet ist. Damit kann einfach eine gegenseitige, umlaufend parallele Ausrichtung der einzelnen Wände zueinander geschaffen werden.

Eine andere mögliche Ausbildung sieht vor, dass in zumindest einer der Wände zumindest in deren Innenlage zumindest eine Ausnehmung, insbesondere eine Nut oder ein Schlitz, ausgebildet ist, und die zumindest eine Ausnehmung in senkrechter Richtung bezüglich der Längserstreckung des Zuschnitts verlaufend ausgerichtet ist. Damit können schon bei der Vorbereitung des Zuschnitts noch als flach liegender Bauteil die später benötigten Halte- und Befestigungsstellen an der dem Innenraum des Kabinenmoduls zugewendeten Innenlage einfach ausgebildet werden. Durch das zusätzliche teilweise Entfernen zumindest der Innenlage können damit Befestigungsstellen oder Befestigungsbereiche geschaffen werden, an denen z.B. Haltegriffe, Leuchtkörper oder andere Befestigungsstellen oder Ankerpunkte oder Ankerhaken für Ausrüstungsgegenstände, Werkzeuge oder dgl. angebracht und gehalten werden können. Durch das Ausnehmen und teilweise Entfernen der Innenlage kann so ein geringer

Überstand über die Innenlage in Richtung auf den Kabineninnenraum erzielt werden oder sogar ein vollständiges Aufnehmen der zuvor beschriebenen Bauteile in der Ausnehmung erfolgen. So können derartige Anbauteile in der Höhe des Hohlprofils aufgenommen werden.

Eine weitere mögliche Ausführungsform hat die Merkmale, dass der zusammenhängende Zuschnitt aus mehreren Hohlprofilen zusammengesetzt ist, welche Hohlprofile in Querrichtung bezüglich der Längserstreckung des Zuschnitts zwischen seinen beiden Endabschnitten nebeneinander angeordnet und an jeweils einander zugewendeten Längsseiten miteinander verbunden, insbesondere gekuppelt, sind. Durch das Zusammensetzen des Zuschnitts aus mehreren nebeneinander angeordneten Hohlprofilen kann so einerseits die Baubreite des herzustellenden Kabinenmoduls und andererseits das Ausmaß des umschlossenen Kabinenraums einfach und kostengünstig an unterschiedlichste Einsatzbedingungen angepasst werden. Durch das gegeneinander Verbinden und Anordnen von mehreren Hohlprofilen nebeneinander kann so auf Standardprofile zurückgegriffen werden, aus welchen zuerst der ebenflächige Zuschnitt gebildet wird. Aus diesem kann durch Anbringen einer in Abhängigkeit von den herzustellenden Wänden entsprechende Anzahl von Trennabschnitten später der selbsttragende Baukörper gebildet werden.

Eine weitere Ausbildung sieht vor, dass die Außenlage und die Innenlage der einzelnen Hohlprofile jeweils mittels zumindest eines sich dazwischen erstreckenden Steges, bevorzugt mittels mehrerer Stege, voneinander distanziert sind. Durch das gegenseitige Verbinden der Außenlage und der Innenlage kann so die Eigenstabilität und Steifigkeit des Hohlprofils noch zusätzlich verbessert werden.

Eine andere Ausführungsform zeichnet sich dadurch aus, dass die jeweils im Trennabschnitt unterbrochen ausgebildeten Innenlagen von jeweils unmittelbar aufeinanderfolgend angeordneten Wänden in einem dem Kabinenraum zugewendeten inneren Eckbereich miteinander verbunden sind, insbesondere stoffschlüssig miteinander verbunden sind. Damit kann auch im inneren Eckbereich trotz der zuvor abgetrennten und abschnittsweise entfernten Innenlage erneut ein stabiler Zusammenhalt und eine verbesserte Eigensteifigkeit des herzustellenden Kabinenmoduls geschaffen werden.

Eine weitere bevorzugte Ausführungsform ist dadurch gekennzeichnet, dass zumindest ein Dämmelement vorgesehen ist, welches zumindest eine Dämmelement in zumindest einer zwischen der Außenlage und der Innenlage des Hohlprofils ausgebildeten Hohlkammer angeordnet ist. Damit kann eine verbesserte Schall- und/oder Wärmedämmung des Kabinenmoduls erzielt werden. Das Isolier- und/oder Dämmelement kann auch zur Schallabsorption und/oder auch zur Erhöhung des Durchschusswiderstandes bei Beschuss mit Waffen oder anderen Gegenständen wie Steinen, Flaschen oder anderen Wurfkörpern dienen. Darüber hinaus kann so aber auch noch je nach Wahl und Eigensteifigkeit des oder der Dämmelemente die gesamte Eigensteifigkeit noch zusätzlich verbessert werden. Das Dämmelement kann z.B. mittels eines in den Hohlraum oder die Hohlkammer eingebrachten Schaummaterials ausgebildet werden.

Weiters kann es vorteilhaft sein, wenn in zumindest einer der Seitenwände und/oder in der Bodenwand und/oder in der Dachwand zumindest ein Durchbruch angeordnet oder ausgebildet ist und der zumindest eine Durchbruch sowohl die Außenlage als auch die Innenlage durchsetzt. Damit kann einfach der Anbau des Kabinenmoduls an das Fahrgestell oder die Fahrerkabine erleichtert werden oder je nach Anforderung und Einsatzzweck ein Aufhahmeraum für ein Sichtfenster, eine Kommunikationsöffhung, eine Dachluke oder dergleichen geschaffen werden. Ist ein Durchbruch in der Dachwand vorgesehen, kann ein ausstellbares Dachfenster oder sogar eine Durchstiegsöffnung ausgebildet werden. Weiters könnte auch als Dachaufsatz eine Klimaanlage und/oder ein Filtermodul für die gefilterte Zufuhr von Frischluft angeordnet werden und so ein Zugang über den Durchbruch in der Dachwand in den Kabineninnraum geschaffen werden.

Eine andere alternative Ausführungsform zeichnet sich dadurch aus, dass an zumindest einem Stirnende des hohlkörperförmigen oder des tunnelförmigen Baukörpers eine Türanordnung und/oder eine Fensteranordnung und/oder eine Rollladenanordnung vorgesehen ist. Damit kann ein seitliches Verschließen des hohlkörperförmig ausgebildeten, tragenden Baukörpers erfolgen, um so ein vollkommen umschlossenes Kabinenmodul ausbilden zu können.

Eine weitere mögliche und gegebenenfalls alternative Ausführungsform hat die Merkmale, dass der Zuschnitt, insbesondere dessen Hohlprofile, aus einem metallischen Werkstoff und/oder einem Kunststoffwerkstoff und/oder einer Kombination daraus gebildet ist. Damit kann einfach auf Standardprodukte für die Herstellung des Zuschnitts zurückgegriffen werden, welche kostengünstig erhältlich sind.

Eine weitere Ausbildung sieht vor, dass als metallischer Werkstoff ein Leichtmetall oder eine Leichtmetalllegierung gewählt ist. Dadurch kann eine Gewichtseinsparung bei hoher Eigenfestigkeit und Eigensteifigkeit des tragenden Baukörpers erzielt werden.

Die Erfindung betrifft aber auch ein Kraftfahrzeug, insbesondere Einsatzfahrzeug, Feuerlöschfahrzeug, Kommunalfahrzeug, Transportfahrzeug, umfassend ein Fahrgestell, eine Fahrerkabine und zumindest ein Kabinenmodul, ein Fahrwerk mit zumindest einer Vorderradanordnung und zumindest einer Hinterradanordnung, und ein Antriebsaggregat, bei welchem zumindest ein erfindungsgemäß ausgebildetes Kabinenmodul als selbsttragender Baukörper verwendet wird und das Kabinenmodul entweder am Fahrgestell gehalten ist oder an der Fahrerkabine daran angebaut ist, insbesondere formschlüssig an der Fahrerkabine angebaut ist. Durch das Anordnen oder Anbauen des Kabinenmoduls am Kraftfahrzeug kann so der Montageaufwand verringert werden und damit eine noch wirtschaftlichere Fertigung ermöglicht werden.

Eine mögliche Ausführungsform zeichnet sich dadurch aus, dass eine Längserstreckung des hohlkörperförmigen oder des tunnelförmigen Baukörpers von einer in Fahrtrichtung gesehen linken Fahrzeugseite hin zu einer rechten Fahrzeugseite verlaufend ausgerichtet ist. Dadurch kann ein in Richtung der Fahrzeugbreite durchlaufend ausgebildetes Kabinenmodul geschaffen werden, bei welchem lediglich an dessen seitlichen Stirnenden jeweils je nach Bedarf die unterschiedlichsten Tür- und/oder Fensteranordnungen einfach angeordnet und damit der Kabineninnenraum allseitig umschlossen werden kann.

Schließlich kann eine Ausbildung des Kraftfahrzeugs von Vorteil sein, bei der innerhalb von zumindest einer Wand des selbsttragenden Baukörpers zwischen einer Innenlage und einer davon distanziert angeordneten Außenlage zumindest eine Leitung angeordnet oder aufgenommen ist. Damit kann zum größten Teil auf das zusätzliche Anordnen von Kabelkanälen verzichtet werden. Darüber hinaus kann so aber auch eine sichere, geschützte Leitungsführung im Bereich des Kabinenmoduls erzielt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Kraftfahrzeug mit einem Kabinenmodul, in Seitenansicht und vereinfachter stilisierter Darstellung;
- Fig. 2: eine mögliche Ausbildung eines Kabinenmoduls, in alleiniger schaubildlicher Darstellung;
- Fig. 3: den Zuschnitt zur Bildung des Kabinenmoduls nach Fig. 2, in gestreckter, unverformter Stellung der einzelnen Wände zueinander und schaubildlicher Darstellung;
- Fig. 4: ein Detail des Zuschnitts im Bereich eines auszubildenden Eckbereichs, in Seitenansicht geschnitten gemäß den Linien IV-IV in Fig. 3 und vergrößerter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

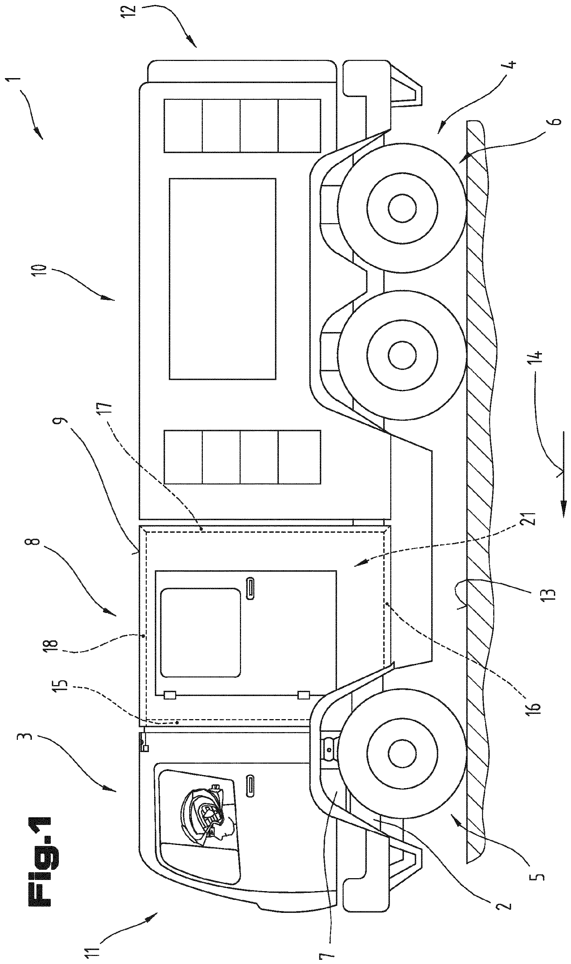

In der Fig. 1 ist ein Kraftfahrzeug 1 in einer vereinfachten Seitenansicht gezeigt. Das Kraftfahrzeug 1 kann z.B. als Einsatzfahrzeug, Feuerwehrfahrzeug, Feuerlöschfahrzeug, Kommunalfahrzeug oder Transportfahrzeug dienen. Bevorzugt ist das Kraftfahrzeug 1 als Lastkraftwagen ausgebildet und kann ein Fahrgestell 2, eine frontseitig daran angeordnete Fahrerkabine 3 sowie ein Fahrwerk 4 mit zumindest einer Vorderradanordnung 5 und zumindest einer Hinterradanordnung 6 umfassen. Jede der Radanordnungen 5, 6 kann beidseits Einzelräder oder aber auch Zwillingsräder aufweisen. Es wäre auch noch möglich, bei jeder der Radanordnungen 5, 6 eine oder auch mehrere Achsen vorzusehen. Zum Antrieb kann ein schematisch angedeutetes Antriebsaggregat 7 dienen.

Als Fahrgestell 2, Rahmen, Chassis oder Untergestell werden grundsätzliche die tragenden Teile von Fahrzeugen, insbesondere von Kraftfahrzeugen 1 bezeichnet. Die tragenden Teile haben die Funktion, den Antrieb, die Karosserie und gegebenenfalls die Nutzlast zu tragen.

Als Fahrwerk 4 bezeichnet man grundsätzlich die Gesamtheit aller Teile eines Landfahrzeugs, die der Verbindung des Fahrgestells 2 über die Räder zur Fahrbahn dienen. Das Fahrwerk 4 zählt unter anderem zu den Hauptbestandteilen des Kraftfahrzeugs 1. Dieses kann Räder, Radträger, Radlager, Bremsen, Radaufhängungen, Fahrschemel, Federung inkl. Stabilisator, Dämpfung und Lenkung umfassen.

In Fahrtrichtung 14 gesehen, ist nachfolgend an die Fahrerkabine 3 - also in Richtung auf das Heck - zumindest ein Kabinenmodul 8 vorgesehen. Die übliche Fahrtrichtung 14 ist mit einem Pfeil in einer Vorwärtsbewegung des Kraftfahrzeugs 1 eingetragen. Das Kabinenmodul 8 ist in Form eines selbsttragenden Baukörpers 9 ausgebildet und kann ohne zusätzliche Trag- und/oder Versteifungselemente direkt am Fahrgestell 2 angeordnet und an diesem ortsfest positioniert gehalten werden. Zur Dämpfung können zusätzlich noch, jedoch nicht näher dargestellte Dämpfungs- und/oder Federelemente vorgesehen werden. Unabhängig davon wäre es aber auch noch möglich, dass das Kabinenmodul 8 direkt an die Fahrerkabine 3 daran angeordnet oder angebaut ist. Damit kann eine Doppelkabine ausgebildet werden, um so eine zusammengehörige Baueinheit aus Fahrerkabine 3 und Kabinenmodul 8 zu bilden.

Das Kabinenmodul 8 kann auch nur als Kabine oder auch als Kabinen-Aufbaumodul bezeichnet werden.

Nachfolgend an das Kabinenmodul 8 kann ein Fahrzeugaufbau 10 angeordnet oder vorgesehen sein. Darin können die unterschiedlichsten Aufnahmefächer und/oder Aufnahmeboxen vorgesehen sein, um so im Falle eines Einsatzes die dafür notwendigen Ausrüstungsgegenstände, Werkzeuge und vieles mehr geordnet mitführen zu können. Dazu können die Aufnahmefächer und/oder Aufnahmeboxen mittels Türen, Rollläden oder anderen Verschlusselementen für den Transport verschlossen und bei Bedarf zugänglich gemacht werden.

Auf die Darstellung sonstiger Einheiten bzw. Bauteilkomponenten wurde der besseren Übersichtlichkeit halber verzichtet.

Das Kraftfahrzeug 1 weist eine Frontseite 11 und eine in Fahrzeuglängsrichtung davon distanzierte Heckseite 12 auf, wodurch eine Baulänge bzw. Fahrzeuglänge definiert ist. Weiters ist hier noch gezeigt, dass das Kraftfahrzeug 1 auf einer bevorzugt horizontal ausgerichteten Aufstandsfläche 13 aufgestellt bzw. darauf abgestützt ist.

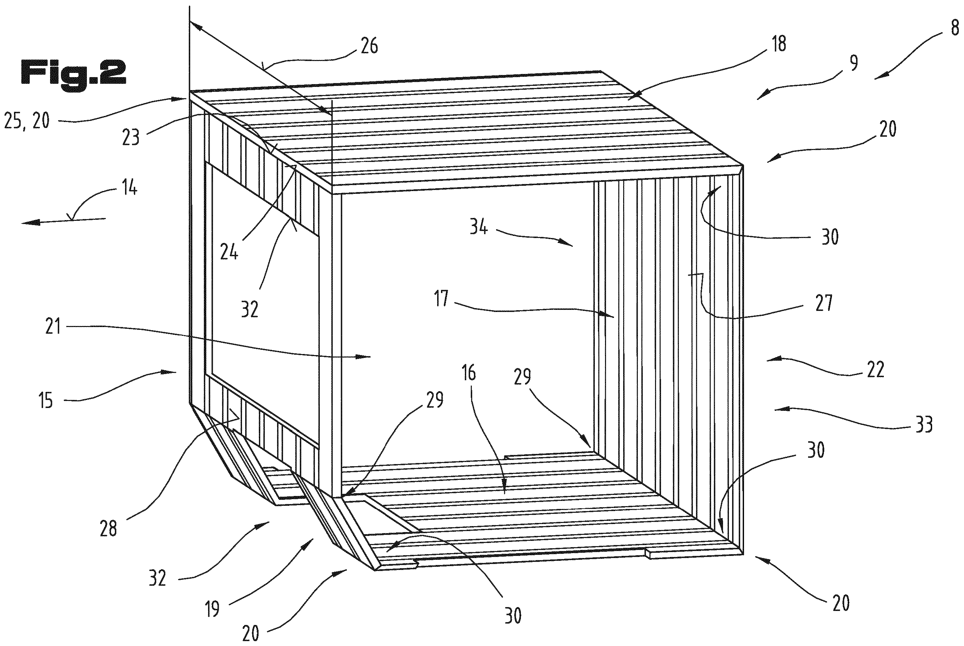

In den Fig. 2 bis 4 ist das Kabinenmodul 8 alleinig in einer möglichen Ausbildung gezeigt und umfasst bei diesem Ausführungsbeispiel zumindest eine erste Seitenwand 15, eine Bodenwand 16, eine zweite Seitenwand 17 sowie eine Dachwand 18. Zusätzlich ist noch dargestellt, dass die erste Seitenwand 15 in ihrem der Bodenwand 16 zugewendeten Ende eine Schrägwand 19 ausbilden kann, welche mit der restlichen ersten Seitenwand 15 einen Winkel von größer 90° bis hin zu 180° einschließen kann. Bevorzugt ist die erste Seitenwand 15 später in Fahrtrichtung 14 gesehen der Frontseite 11 des Kraftfahrzeugs 1 zugewendet und die zweite Seitenwand 17 der Heckseite 12 desselben. So kann die erste Seitenwand 15 auch als Frontwand und die zweite Seitenwand 17 auch als Heckwand des Kabinenmoduls 8 bezeichnet werden.

Bevorzugt schließen jeweils unmittelbar in einem Eckbereich 20 angrenzende und einander zugewendete Wände 15 bis 18 einen Winkel von 90° zwischen sich ein. Von den einzelnen Wänden 15 bis 18 ist in Umfangsrichtung und somit in deren umlaufenden Längsverlauf gesehen ein Kabinenraum 21 zumindest bereichsweise umgrenzt.

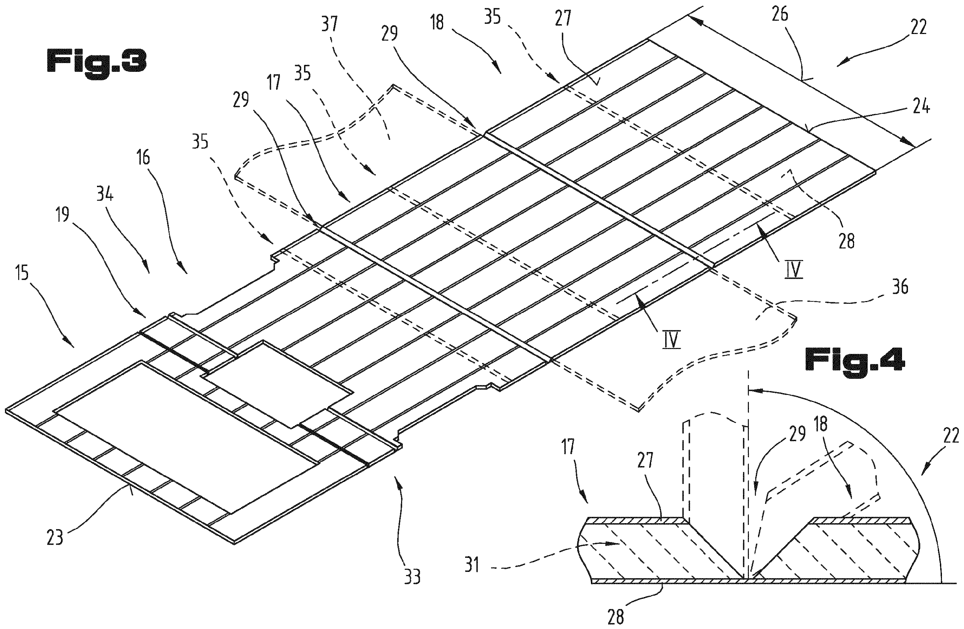

Wie nun besser aus den Fig. 2 und 3 zu ersehen ist, sind die einzelnen Wände 15 bis 18 aus einem einzigen zusammenhängenden Zuschnitt 22 gebildet. Der Zuschnitt 22 weist in Richtung seiner Längserstreckung gesehen einen ersten Endabschnitt 23 und einen davon beabstandet und distanziert angeordneten zweiten Endabschnitt 24 auf. Der erste Endabschnitt 23 ist in der den Kabinenraum 21 ausbildenden Stellung der Wände 15 bis 18 des Zuschnitts 22 dem zweiten Endabschnitt 24 zugewendet und unter Ausbildung eines Stoßbereichs 25 auch mit dem zweiten Endabschnitt 24 verbunden. Diese gegenseitige Verbindung der beiden Endabschnitte 23, 24 könnte mittels einer stoffschlüssigen Verbindung, wie z.B. einem Schweißvorgang, Lötvorgang oder einem Klebevorgang erfolgen. So kann z.B. eine Schweißnaht mit oder ohne Zusatzwerkstoff ausgebildet werden. Es könnte auch eine Laserschweißung durchgeführt werden. Unabhängig davon oder zusätzlich dazu wäre es aber auch noch möglich, die beiden Endabschnitte 23, 24 in einem der Eckbereiche 20 unter Ausbildung des Stoßbereichs 25 zwischen zwei einander benachbarten Wänden, im vorliegenden Ausführungsbeispiel zwischen der ersten Seitenwand 15 und der Dachwand 18, mittels eines Ecksteckprofils form- und/oder kraftschlüssig miteinander zu verbinden. Zusätzlich dazu kann auch noch eine Verklebung des Ecksteckprofils mit den angrenzenden Wänden 15, 18 erfolgen.

Die Anordnung des Stoßbereichs 25 kann in jedem der einzelnen Eckbereiche 20 vorgesehen werden. In Abhängigkeit davon, ist die Reihenfolge der einzelnen Wände 15 bis 18 am Zuschnitt 22 anzuordnen. Bei dem hier gezeigten und vorliegenden Ausführungsbeispiel ist der erste Endabschnitt 23 an der ersten Seitenwand 15 und der zweite Endabschnitt 24 an der Dachwand 18 angeordnet. Die Dachwand 18 liegt dabei abgestützt an einer Stirnfläche der ersten Seitenwand 15 im Bereich des ersten Endabschnitts 23 an.

Es wäre aber auch möglich, den Stoßbereich 25 z.B. im Eckbereich 20 zwischen der Bodenwand 16 und der zweiten Seitenwand 17 anzuordnen. Unabhängig davon könnte aber auch der Stoßbereich 25 zwischen der ersten Seitenwand 15 und der Bodenwand 16 oder aber auch zwischen der zweiten Seitenwand 17 und der Dachwand 18 angeordnet oder ausgebildet sein. Weiters könnte aber auch der Stoßbereich 25 direkt in einer der Wände 15 bis 18 verlaufend angeordnet werden.

Die nachfolgende Beschreibung der Ausbildung des Zuschnitts 22 und der Anordnung des Stoßbereichs 25 bezieht sich auf seine Anordnung zwischen der ersten Seitenwand 15 und der Dachwand 18.

Eine Breite 26 des Zuschnitts 22 in senkrechter Richtung bezüglich seiner Längserstreckung bildet später eine Kabinenbreite in Querrichtung bezüglich der Fahrtrichtung 14 gesehen aus.

Der Zuschnitt 22 und damit auch die daraus gebildeten Wände 15 bis 18 weisen eine dem Kabinenraum 21 zugewendete Innenlage 27 und eine davon distanziert angeordnete Außenlage 28 auf. In auszubildenden Eckbereichen 20 zwischen jeweils unmittelbar aufeinanderfolgend am Zuschnitt 22 vorgesehenen und später auszubildenden Wänden 15, 16; 16, 17; 17, 18 ist die Außenlage 28 jeweils durchlaufend und später umgeformt zwischen jeweils unmittelbar aufeinanderfolgend angeordneten Wänden 15, 16; 16, 17; 17, 18 ausgebildet. Eine Ausnahme davon könnte ein Durchbruch oder eine Durchsetzung in einem der Eckbereiche 20 darstellen.

Um die einzelnen Wände 15 bis 18 in ihren einander zugewendeten und später den Eckbereich 20 ausbildenden Enden aufgrund ihrer Wandstärke und der durchlaufend ausgebildeten Außenlage 28 im jeweiligen Eckbereich 20 von der gestreckten unverformten Lage aufeinander zu verlagern, ist ausgehend von der Innenlage 27 in Richtung auf die Außenlage 28 eine nutförmige Vertiefung mit einem V-förmigen Querschnitt auszubilden. Dies ist vereinfacht in der Fig. 4 dargestellt.

Die nutförmige Vertiefung mit ihren beiden aufeinander zulaufenden Nutseitenflächen endet bevorzugt an einer der Innenlage 27 zugewendeten Innenfläche der Außenlage 28. In bekannter Weise ist der von den Nutseitenflächen eingeschlossene Winkel so groß zu wählen, dass dieser dem von den beiden Wänden 15 bis 18 in der aufgerichteten Stellung der Wände 15 bis 18 eingeschlossenen Winkel gleich ist. Dazu sind beiderseits des Biegebereichs der Außenlage 28 die jeweilige Innenlage 27 dazu gekürzt auszubilden. Dabei bildet sich in der Innenlage 27 zwischen unmittelbar aufeinanderfolgend angeordneten Wänden 15 bis 18 ein Trennabschnitt 29 aus. Der oder die Trennabschnitte 29 der Innenlage 27 sind bevorzugt in senkrechter Richtung bezüglich der Längserstreckung des Zuschnitts 22 zwischen seinen beiden Endabschnitten 23, 24 verlaufend ausgerichtet.

Die Außenlage 28 kann daher zur Bildung des oder Eckbereiche 20 durchlaufend jedoch entlang einer Biegelinie umgeformt sein.

Sind die mittels der Außenlage 28 noch zusammenhängenden Wände 15 bis 18 zu dem selbsttragenden Baukörper 9 aufgerichtet, bilden diese einen von den Wänden 15 bis 18 im Querschnitt gesehen umgrenzten Hohlkörper aus. Der Hohlkörper kann auch als Hohlquader bezeichnet werden, welcher eine Art von Tunnel ausbildet oder umgrenzt.

Weiters ist hier noch vorgesehen, dass der zuvor beschriebene Stoßbereich 25 zwischen den beiden einander zugewendeten Endabschnitten 23, 24 in einem der Eckbereiche 20 des selbsttragenden Baukörpers 9 angeordnet ist. Dieser könnte aber auch, wie zuvor beschrieben an einem anderen der Eckbereiche 20 angeordnet werden.

Der zusammenhängende Zuschnitt 22 kann bevorzugt aus mehreren Hohlprofilen zusammengesetzt sein. Dabei sind die einzelnen Hohlprofile in Querrichtung bezüglich der Längserstreckung des Zuschnitts 22 zwischen seinen beiden Endabschnitten 23, 24 nebeneinander angeordnet und an jeweils einander zugewendeten Längsseiten miteinander verbunden, insbesondere miteinander gekuppelt. Dies kann auf formschlüssiger Basis erfolgen, wie dies bei derartigen Hohlprofilen bekannt ist. Die Längserstreckung der einzelnen Hohlprofile verläuft damit ebenfalls in paralleler Richtung bezüglich der Längserstreckung des Zuschnitts 22 zwischen seinen beiden Endabschnitten 23, 24.

Zur Verstärkung und Versteifung des Zuschnitts 22, insbesondere der einzelnen Hohlprofile, kann die Außenlage 28 und die Innenlage 27 mittels zumindest eines sich dazwischen erstreckenden Steges voneinander distanziert und damit relativ zueinander positioniert sein. Bevorzugt sind jedoch bei jedem der Hohlprofile mehrere der Stege vorgesehen. Die Ausrichtung der Stege zwischen der Innenlage 27 und der Außenlage 28 kann im Querschnitt des Hohlprofils gesehen beliebig gewählt sein.

In einzelnen der Wände 15 bis 18 können in Querrichtung bezüglich der Längserstreckung des Zuschnitts 22, insbesondere quer zu dessen Hohlprofilen, zusätzliche Ausnehmungen 35 wie z.B. Nuten (Quernuten) oder Schlitze, zumindest in die Innenlage 27 eingearbeitet, insbesondere gefräst, sein, welche zur späteren Aufnahme von Sitzkasten, Ankerpunkte für Sicherheitsgurten oder Halter von Pressluftatmern dienen können. Sind Längsstege innerhalb des Zwischenraums zwischen der Innenlage 27 und der Außenlage 28 vorgesehen, sind diese ebenfalls im Bereich der Ausnehmung 35 auszunehmen oder zu entfernen. In den Ausnehmungen 35 wie den Nuten (Quernuten) oder Schlitzen können Befestigungsmittel wie z.B. Ankerschrauben eingesetzt und bei Bedarf zum benötigten und auszubildenden Befestigungspunkt verlagert oder verschoben werden. Damit können die Rückhaltekräfte ausgehend vom jeweiligen Befestigungsmittel in die tragende Struktur des Kabinenmoduls 8 eingebracht werden. Die zumindest eine Ausnehmung 35 kann in senkrechter Richtung bezüglich der Längserstreckung des Zuschnitts 22 verlaufend ausgerichtet sein.

Um eine hohe Eigenstabilität zu erzielen und das selbsttragende Kabinenmodul 8 als zusammengehörigen Baukörper 9 ausbilden zu können, sollen die zuvor in den Trennabschnitten 29 aufgetrennten Innenlagen 27 der unmittelbar aufeinanderfolgend angeordneten Wänden 15 bis 18 jeweils in einem dem Kabinenraum 21 zugewendeten inneren Eckbereich 30 miteinander verbunden sein. Dies kann mittels nicht näher dargestellter, zusätzlicher Verbindungswinkel und/oder aber auch mittels einer stoffschlüssigen Verbindung, wie z.B. einem Schweißvorgang, Lötvorgang oder einem Klebevorgang erfolgen. So kann z.B. eine Schweißnaht mit oder ohne Zusatzwerkstoff ausgebildet werden. Es könnte auch eine Laserschweißung durchgeführt werden.

Zur Erzielung einer besseren Schall- und/oder Wärmedämmung von einzelnen der Wände 15 bis 18 kann zumindest ein Dämmelement 31 vorgesehen sein. Das zumindest eine Dämmelement 31 kann in einer zwischen der Außenlage 28 und der Innenlage 27 ausgebildeten Hohlkammer aufgenommen und darin angeordnet sein. Sind die Wände 15 bis 18 aus mehreren Hohlprofilen gebildet, können mehrere Dämmelemente 31 jeweils in deren Hohlkammern aufgenommen und darin angeordnet sein.

Je nach Wahl des Dämmstoffes könnte z.B. das Dämmmaterial als Schaummasse in den zwischen der Innenlage 27 und der Außenlage 28 ausgebildeten Hohlraum oder die Hohlkammern eingebracht, insbesondere eingespritzt werden. Das Einbringen kann z.B. in einem der auszubildenden Eckbereiche 20 im Bereich der ausgebildeten Trennabschnitte 29 erfolgen. Damit kann einfach ein bereits vorhandener Zugang in den Zwischenraum zwischen der Innenlage 27 und der Außenlage 28 zum ausgenutzt werden, ohne dass zusätzliche Öffnungen geschaffen werden müssen.

Zwischen der Innenlage 27 und der Außenlage 28 und somit innerhalb des Hohlprofils oder innerhalb zumindest einer Hohlkammer desselben, kann oder können Leitungen der unterschiedlichsten Art angeordnet und aufgenommen sein. Dabei kann es sich um elektrische Leitungen, Leitungen für die unterschiedlichsten Druckmedien oder Leitungen für Löschmittel oder dgl. handeln. Es wäre auch noch möglich, innerhalb eines Hohlprofils und/oder einer Hohlkammer desselben, direkt ein strömungsfähiges Medium hindurchzuleiten. Um einen Zugang und/oder einen Ausgang in oder aus dem Hohlprofil und/oder einer Hohlkammer zu schaffen, sind in der Innenlage 27 und/oder der Außenlage 28 nicht näher dargestellte und bezeichnete Öffnungen vorzusehen.

Es kann auch noch in zumindest einer der Wände 15 bis 18 zumindest ein Durchbruch 32 angeordnet oder ausgebildet sein. Der zumindest eine Durchbruch 32 durchsetzt sowohl die Außenlage 28 als auch die Innenlage 27 vollständig und kann zur Aufnahme oder Ausbildung eines Fensters, einer Sichtöffnung, einer Kommunikationsöffnung, einer Dachluke oder eines Bauteils des Kraftfahrzeugs 1 dienen.

Befindet sich das Kabinenmodul 8 in seiner Aufbaustellung am Fahrgestell 2, ist die Längserstreckung des Zuschnitts 22 in paralleler Richtung bezüglich der Fahrtrichtung 14 verlaufend ausgerichtet. Das Kabinenmodul 8 ist jeweils randseitig und somit im Bereich von durch die Breite 26 voneinander distanzierten Längsrändern, von einem linken Stirnende 33 und einem rechten Stirnende 34 bezogen auf die Fahrtrichtung 14 begrenzt. In diesem Fall weist der Hohlkörper oder der hohlprofilförmig ausgebildete Baukörper 9 eine Längserstreckung auf, welche von einer linken Fahrzeugseite hin zu einer rechten Fahrzeugseite verlaufend ausgerichtet ist.

An zumindest einem der Stirnenden 33 und/oder 34 des hohlkörperförmigen Baukörpers 9 kann eine Türanordnung und/oder eine Fensteranordnung und/oder eine Kombination daraus und/oder eine Rollladenanordnung vorgesehen sein. Zusätzliche Verplankungen und/oder Verkleidungselemente können ebenfalls noch im Bereich der Stirnenden 33 und/oder 34 vorgesehen sein. Weiters wäre es noch möglich, zusätzlich an der Außenlage 28 von zumindest einzelnen der Wände 15 bis 18 ein Verkleidungselement anzuordnen oder anzubringen, um damit ein mögliches Schutzelement oder eine formgebende Struktur für den Baukörper aus den Hohlprofilen zu bilden.

Mittels der zusätzlichen Verplankungen und/oder der Verkleidungselemente kann die Querstabilität des Baukörpers 9 in Fahrtrichtung 14 gesehen noch erhöht und verbessert werden. So können relative Verlagerungen der Dachwand 18 bezüglich der Bodenwand 16 reduziert und somit Verwindungen des Baukörpers 9 im Fahrbetrieb ebenfalls herabgesetzt werden.

Sind die Wände 15 bis 18 aus mehreren Hohlprofilen zusammengesetzt, können diese aus einem metallischen Werkstoff und/oder einem Kunststoffwerkstoff und/oder metallisierte Werkstoffe kombiniert mit einem Kunststoffmaterial gebildet sein. Es können aber auch zueinander unterschiedliche Werkstoffe miteinander kombiniert werden und z.B. ein Verbundprofil oder ein Verbundwerkstoff für die Bildung des Zuschnitts 22 eingesetzt werden. Weiters könnten z.B. auch faserverstärkte Kunststoffe oder Faserverbundwerkstoffe eingesetzt werden.

Die Hohlprofile aus dem metallischen Werkstoff können in einem Strangpressverfahren hergestellt werden. Jene aus dem Kunststoffwerkstoff können in einem Extrusionsvorgang hergestellt sein. Es wäre auch noch möglich, das oder die zuvor beschriebenen Dämmelemente 31 gleich im Zuge des Herstellvorgangs des jeweiligen Hohlprofils mit in diesem anzuordnen oder einzubringen.

Als metallische Werkstoffen werden bevorzugt Leichtmetalle und/oder Leichtmetalllegierungen eingesetzt.

Zusätzlich könnten aber auch noch eine linke Seitenwand 36 und/oder eine rechte Seitenwand 37 vorgesehen sein, welche ebenfalls einen einstückigen Bestandteil des Zuschnitts 22 ausbilden oder darstellen. Dies ist beispielhaft in der Fig. 3 seitlich neben der zweiten Seitenwand 17 jeweils im Bereich des linken Stirnendes 33 sowie des rechten Stirnendes 34 des Zuschnitts 22 angedeutet. Die Seitenwände 36 und/oder 37 könnten aber auch an anderen der Wände unmittelbar daran seitlich anschließend angeordnet sein. Dies ist bei der Ausbildung des Zuschnitts 22 aus mehreren nebeneinander angeordneten Hohlprofilen zu realisieren. Damit kann aus dem Zuschnitt 22 bei Vorsehen der linken und der rechten Seitenwand 36 und 37 das Kabinenmodul 8 als Hohlquader ausgebildet werden. Die gegenseitige Verbindung zwischen den einzelnen Wänden 15 bis 18, 19, 36 und 37 kann stoffschlüssig mittels eines Schweißvorganges, Klebevorganges oder aber auch mittels Ecksteckprofilen erfolgen.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Kraftfahrzeug | 31 | Dämmelement |
| 2 | Fahrgestell | 32 | Durchbruch |
| 3 | Fahrerkabine | 33 | linkes Stirnende |
| 4 | Fahrwerk | 34 | rechtes Stirnende |
| 5 | Vorderradanordnung | 35 | Ausnehmung |
| 6 | Hinterradanordnung | 36 | linke Seitenwand |
| 7 | Antriebsaggregat | 37 | rechte Seitenwand |
| 8 | Kabinenmodul | | |
| 9 | Baukörper | | |
| 10 | Fahrzeugaufbau | | |
| 11 | Frontseite | | |
| 12 | Heckseite | | |
| 13 | Aufstandsfläche | | |
| 14 | Fahrtrichtung | | |
| 15 | erste Seitenwand | | |
| 16 | Bodenwand | | |
| 17 | zweite Seitenwand | | |
| 18 | Dachwand | | |
| 19 | Schrägwand | | |
| 20 | Eckbereich | | |
| 21 | Kabinenraum | | |
| 22 | Zuschnitt | | |
| 23 | erster Endabschnitt | | |
| 24 | zweiter Endabschnitt | | |
| 25 | Stoßbereich | | |
| 26 | Breite | | |
| 27 | Innenlage | | |
| 28 | Außenlage | | |
| 29 | Trennabschnitt | | |
| 30 | innerer Eckbereich | | |

## Patentansprüche

1. Kabinenmodul (8) in Form eines selbsttragenden Baukörpers (9), insbesondere für ein Kraftfahrzeug (1), wie ein Einsatzfahrzeug, ein Feuerwehrfahrzeug, ein Feuerlöschfahrzeug, ein Kommunalfahrzeug, oder ein Transportfahrzeug, umfassend
- mehrere Wände (15 bis 18), die einen Kabinenraum (21) zumindest bereichsweise umgrenzen, wobei
- die Wände (15 bis 18) jeweils eine dem Kabinenraum (21) zugewendete Innenlage (27) und eine davon distanziert angeordnete Außenlage (28) umfassen, und
- die einzelnen Wände (15 bis 18) aus einem zusammenhängenden Zuschnitt (22) mit einem ersten Endabschnitt (23) und einem in Längserstreckung des Zuschnitts (22) davon distanziert angeordneten zweiten Endabschnitt (24) gebildet sind, wobei
- in Eckbereichen (20) von unmittelbar aufeinanderfolgend angeordneten Wänden (15 bis 18) die Außenlage (28) jeweils durchlaufend und umgeformt zwischen jeweils unmittelbar aufeinanderfolgend angeordneten Wänden (15 bis 18) ausgebildet ist und die Innenlage (27) zwischen den jeweils unmittelbar aufeinanderfolgend angeordneten Wänden (15 bis 18) von einem Trennabschnitt (29) unterbrochen sowie bezüglich der umgeformten Außenlage (28) dazu gekürzt ausgebildet ist,
**dadurch gekennzeichnet,**
- **dass** zumindest eine erste Seitenwand (15), eine Bodenwand (16), eine zweite Seitenwand (17) sowie eine Dachwand (18) vorgesehen sind, welche Wände (15 bis 18) aus dem zusammenhängenden Zuschnitt (22) gebildet sind,
- **dass** der erste Endabschnitt (23) des Zuschnitts (22) in einem Stoßbereich (25) mit dem zweiten Endabschnitt (24) des Zuschnitts (22) verbunden ist, und
- **dass** die Wände (15 bis 18) den selbsttragenden Baukörper (9) in Form eines Hohlkörpers ausbilden.

2. Kabinenmodul (8) nach Anspruch 1, **dadurch gekennzeichnet, dass** der Stoßbereich (25) der beiden einander zugewendeten Endabschnitte (23, 24) in einem der Eckbereiche (20) des selbsttragenden Baukörpers (9) angeordnet ist.

3. Kabinenmodul (8) nach Anspruch 1 oder 2, **dadurch gekennzeichnet, dass** der Trennabschnitt (29) der Innenlage (27) in senkrechter Richtung bezüglich der Längserstreckung des Zuschnitts (22) zwischen seinen beiden Endabschnitten (23, 24) verlaufend ausgerichtet ist.

4. Kabinenmodul (8) nach einem der vorhergehenden Ansprüche, **dadurch gekennzeichnet, dass** in zumindest einer der Wände (15 bis 18) zumindest in deren Innenlage (27) zumindest eine Ausnehmung (35), insbesondere eine Nut oder ein Schlitz, ausgebildet ist, und die zumindest eine Ausnehmung (35) in senkrechter Richtung bezüglich der Längserstreckung des Zuschnitts (22) verlaufend ausgerichtet ist.

5. Kabinenmodul (8) nach einem der vorhergehenden Ansprüche, **dadurch gekennzeichnet, dass** der zusammenhängende Zuschnitt (22) aus mehreren Hohlprofilen zusammengesetzt ist, welche Hohlprofile in Querrichtung bezüglich der Längserstreckung des Zuschnitts (22) zwischen seinen beiden Endabschnitten (23, 24) nebeneinander angeordnet und an jeweils einander zugewendeten Längsseiten miteinander verbunden, insbesondere gekuppelt, sind.

6. Kabinenmodul (8) nach einem der vorhergehenden Ansprüche, **dadurch gekennzeichnet, dass** die Außenlage (28) und die Innenlage (27) der einzelnen Hohlprofile jeweils mittels zumindest eines sich dazwischen erstreckenden Steges, bevorzugt mittels mehrerer Stege, voneinander distanziert sind.

7. Kabinenmodul (8) nach einem der vorhergehenden Ansprüche, **dadurch gekennzeichnet, dass** die jeweils im Trennabschnitt (29) unterbrochen ausgebildeten Innenlagen (27) von jeweils unmittelbar aufeinanderfolgend angeordneten Wänden (15 bis 18) in einem dem Kabinenraum (21) zugewendeten inneren Eckbereich (30) miteinander verbunden sind, insbesondere stoffschlüssig miteinander verbunden sind.

8. Kabinenmodul (8) nach einem der vorhergehenden Ansprüche, **dadurch gekennzeichnet, dass** zumindest ein Dämmelement (31) vorgesehen ist, welches zumindest eine Dämmelement (31) in zumindest einer zwischen der Außenlage (28) und der Innenlage (27) des Hohlprofils ausgebildeten Hohlkammer angeordnet ist.

9. Kabinenmodul (8) nach einem der vorhergehenden Ansprüche, **dadurch gekennzeichnet, dass** in zumindest einer der Seitenwände (15, 17) und/oder in der Bodenwand (16) und/oder in der Dachwand (18) zumindest ein Durchbruch (32) angeordnet oder ausgebildet ist und der zumindest eine Durchbruch (32) sowohl die Außenlage (28) als auch die Innenlage (27) durchsetzt.

10. Kabinenmodul (8) nach einem der vorhergehenden Ansprüche, **dadurch gekennzeichnet, dass** an zumindest einem Stirnende (33, 34) des hohlkörperförmigen Baukörpers (9) eine Türanordnung und/oder eine Fensteranordnung und/oder eine Rollladenanordnung vorgesehen ist.

11. Kabinenmodul (8) nach einem der vorhergehenden Ansprüche, **dadurch gekennzeichnet, dass** der Zuschnitt (22), insbesondere dessen Hohlprofile, aus einem metallischen Werkstoff und/oder einem Kunststoffwerkstoff und/oder einer Kombination daraus gebildet ist.

12. Kabinenmodul (8) nach Anspruch 11, **dadurch gekennzeichnet, dass** als metallischer Werkstoff ein Leichtmetall oder eine Leichtmetalllegierung gewählt ist.

13. Kraftfahrzeug (1), insbesondere Einsatzfahrzeug, Feuerlöschfahrzeug, Kommunalfahrzeug, Transportfahrzeug, umfassend
ein Fahrgestell (2), eine Fahrerkabine (3) und zumindest ein Kabinenmodul (8), ein Fahrwerk (4) mit zumindest einer Vorderradanordnung (5) und zumindest einer Hinterradanordnung (6), und ein Antriebsaggregat (7), **dadurch kennzeichnet, dass** das zumindest eine Kabinenmodul (8) als selbsttragender Baukörper (9) nach einem der vorhergehenden Ansprüche ausgebildet ist und entweder am Fahrgestell (2) gehalten ist oder an der Fahrerkabine (3) daran angebaut ist, insbesondere formschlüssig daran angebaut ist.

14. Kraftfahrzeug (1) nach Anspruch 13, **dadurch gekennzeichnet, dass** eine Längserstreckung des hohlkörperförmigen Baukörpers (9) von einer in Fahrtrichtung (14) gesehen linken Fahrzeugseite hin zu einer rechten Fahrzeugseite verlaufend ausgerichtet ist.

15. Kraftfahrzeug (1) nach Anspruch 13 oder 14, **dadurch gekennzeichnet, dass** innerhalb von zumindest einer Wand (15 bis 18) des selbsttragenden Baukörpers (9) zwischen einer Innenlage (27) und einer davon distanziert angeordneten Außenlage (28) zumindest eine Leitung angeordnet oder aufgenommen ist.

## Claims

1. A cabin module (8) in the form of a self-supporting structural body (9), in particular for a motor vehicle (1), such as an emergency vehicle, a fire engine, a firefighting vehicle, a communal vehicle or a transport vehicle, comprising
- several walls (15 to 18), which at least sectionally delimit a cabin area (21), wherein
- the walls (15 to 18) each comprise an inner layer (27) facing the cabin area (21) and an outer layer (28) arranged at a distance therefrom, and
- the individual walls (15 to 18) are formed of a continuous blank (22) with a first end section (23) and a second end section (24) arranged at a distance thereof in the longitudinal extension of the blank (22), wherein
- in edge regions (20) of walls (15 to 18) arranged so as to directly follow one another, the outer layer (28) is in each case designed to be continuous and deformed between walls (15 to 18) arranged so as to directly follow one another in each case and the inner layer (27) is designed to be interrupted by a separating section (29) between the walls (15 to 18) arranged so as to directly follow one another in each case and to be shortened with respect to the deformed outer layer (28),
**characterized in that**
- at least one first lateral wall (15), a base wall (16), a second lateral wall (17) as well as a roof wall (18) are provided, said walls (15 to 18) being formed of the continuous blank (22),
- the first end section (23) of the blank (22) is connected to the second end section (24) of the blank (22) in a joint area (25), and
- the walls (15 to 18) form the self-supporting structural body (9) in the form of a hollow body.

2. The cabin module (8) according to claim 1, **characterized in that** the joint area (25) of the two end sections (23, 24) facing one another is arranged in one of the edge regions (20) of the self-supporting structural body (9).

3. The cabin module (8) according to claim 1 or 2, **characterized in that** the separating section (29) of the inner layer (27) is oriented extending in perpendicular direction with respect to the longitudinal extension of the blank (22) between its two end sections (23, 24).

4. The cabin module (8) according to one of the preceding claims, **characterized in that** in at least one of the walls (15 to 18), at least in its inner layer (27), at least one recess (35), in particular a groove or a slot, is formed, and the at least one recess (35) is oriented extending in perpendicular direction with respect to the longitudinal extension of the blank (22).

5. The cabin module (8) according to one of the preceding claims, **characterized in that** the continuous blank (22) is assembled of several hollow profiles, said hollow profiles being arranged next to one another in transverse direction with respect to the longitudinal extension of the blank (22) between its two end sections (23, 24) and being connected, in particular coupled, to one another on longitudinal sides facing one another.

6. The cabin module (8) according to one of the preceding claims, **characterized in that** the outer layer (28) and the inner layer (27) of the individual hollow profiles are in each case distanced from one another by means of at least one web, preferably by means of several webs.

7. The cabin module (8) according to one of the preceding claims, **characterized in that** the inner layers (27) designed so as to be interrupted in the separating section (29) in each case are connected to one another, in particular connected to one another in a materially bonded manner, by walls (15 to 18) arranged so as to directly follow one another in an inner edge region (30) facing the cabin area (21).

8. The cabin module (8) according to one of the preceding claims, **characterized in that** the at least one insulation element (31) is provided, said at least one insulation element (31) being arranged in at least one hollow chamber formed between the outer layer (28) and the inner layer (27) of the hollow profile.

9. The cabin module (8) according to one of the preceding claims, **characterized in that** in at least one of the lateral walls (15, 17) and/or in the base wall (16) and/or in the roof wall (18), at least one breakthrough (32) is arranged or formed and the at least one breakthrough (32) penetrates both the outer layer (28) and the inner layer (27).

10. The cabin module (8) according to one of the preceding claims, **characterized in that** a door arrangement and/or a window arrangement and/or a shutter arrangement is provided on at least one end face (33, 34) of the hollow-body-shaped structural body (9).

11. The cabin module (8) according to one of the preceding claims, **characterized in that** the blank (22), in particular its hollow profiles, is formed of a metal material and/or a plastic material and/or a combination thereof.

12. The cabin module (8) according to claim 11, **characterized in that** a light metal or a light metal alloy is selected as the metal material.

13. A motor vehicle (1), in particular an emergency vehicle, a fire engine, a communal vehicle, a transport vehicle, comprising
a chassis (2), a driver's cabin (3) and at least one cabin module (8), an undercarriage (4) with at least one front wheel arrangement (5) and at least one back wheel arrangement (6), and a power plant (7), **characterized in that** the at least one cabin module (8) is formed as a self-supporting structural body (9) according to one of the preceding claims and is either held on the undercarriage (2) or mounted on the driver's cabin (3) thereon, in particular mounted thereon in a positively locked manner.

14. The motor vehicle (1) according to claim 13, **characterized in that** a longitudinal extension of the hollow-body-shaped structural body (9) is oriented extending from a left side of the vehicle to a right side of the vehicle as seen in the driving direction (14).

15. The motor vehicle (1) according to claim 13 or 14, **characterized in that** at least one line is arranged or accommodated within at least one wall (15 to 18) of the self-supporting structural body (9) between an inner layer (27) and an outer layer (28) arranged at a distance thereof.

## Revendications

1. Module de cabine (8) sous la forme d'un élément structurel autoporteur (9), plus particulièrement pour un véhicule automobile (1), comme un véhicule d'intervention, un véhicule de pompiers, un véhicule d'extinction d'incendie, un véhicule communal ou un véhicule de transport, comprenant
- plusieurs parois (15 à 18), qui délimitent un espace de cabine (21) au moins à certains endroits, dans lequel
- les parois (15 à 18) comprennent chacune une couche interne (27) orientée vers l'espace de la cabine (21) et une couche externe (28) disposée de manière distante par rapport à celle-ci et
- les différentes parois (15 à 18) sont constituées d'une découpe d'une seule pièce (22) avec une première portion d'extrémité (23) et une deuxième portion d'extrémité (24) disposée de manière distante par rapport à celle-ci dans l'extension longitudinale de la découpe (22), dans lequel
- dans les angles (20) des parois (15 à 18) disposées de manière directement adjacente, la couche externe (28) est réalisée de manière respectivement continue et déformée entre des parois (15 à 18) disposées de manière directement adjacente et la couche interne (27) est réalisée entre les parois (15 à 18) disposées de manière directement adjacente de manière interrompue par une portion de séparation (29) ainsi que de manière raccourcie par rapport à celle-ci en ce qui concerne la couche externe (28) déformée,
**caractérisé en ce que**
- au moins une première paroi latérale (15), une paroi de fond (16), une deuxième paroi latérale (17) ainsi qu'une paroi de toit (18) sont prévues, ces parois (15 à 18) étant constituées de la découpe d'une seule pièce (22),
- la première portion d'extrémité (23) de la découpe (22) est reliée, dans une zone de jonction (25), avec la deuxième portion d'extrémité (24) de la découpe (22) et
- les parois (15 à 18) constituent l'élément structurel autoporteur (9) sous la forme d'un corps creux.

2. Module de cabine (8) selon la revendication 1, **caractérisé en ce que** la zone de jonction (25) des deux portions d'extrémité (23, 24) orientées l'une vers l'autre est disposée dans un des angles (20) de l'élément structurel autoporteur (9).

3. Module de cabine (8) selon la revendication 1 ou 2, **caractérisé en ce que** la portion de séparation (29) de la couche interne (27) est orientée de façon à s'étendre dans la direction perpendiculaire par rapport à l'extension longitudinale de la découpe (22) entre ses deux portions d'extrémité (23, 24).

4. Module de cabine (8) selon l'une des revendications précédentes, **caractérisé en ce que**, dans au moins une des parois (15 à 18), au moins dans leur couche interne (27), est réalisé au moins un évidement (35), plus particulièrement une rainure ou une fente, et l'au moins un évidement (35) est orienté de façon à s'étendre dans la direction perpendiculaire par rapport à l'extension longitudinale de la découpe (22).

5. Module de cabine (8) selon l'une des revendications précédentes, **caractérisé en ce que** la découpe d'une seule pièce (22) est constituée de plusieurs profilés creux, ces profilés creux étant juxtaposés dans la direction transversale par rapport à l'extension longitudinale de la découpe (22) entre ses deux portions d'extrémité (23, 24) et sont reliées entre elles, plus particulièrement couplées, respectivement au niveau de côtés longitudinaux orientés les uns vers les autres.

6. Module de cabine (8) selon l'une des revendications précédentes, **caractérisé en ce que** la couche externe (28) et la couche interne (27) des différentes profilés creux sont écartés entre eux chacun au moyen d'au moins une nervure, de préférence au moyen de plusieurs nervures, disposées entre elles.

7. Module de cabine (8) selon l'une des revendications précédentes, **caractérisé en ce que** les couches internes (27) réalisées de manière interrompue dans la portion de séparation (29) sont reliées entre elles, plus particulièrement sont reliées entre elles par liaison de matière, par des parois (15 à 18) se succédant directement dans un angle interne (30) orienté vers l'espace de la cabine (21).

8. Module de cabine (8) selon l'une des revendications précédentes, **caractérisé en ce qu'**au moins un élément d'isolation (31) est prévu, cet au moins un élément d'isolation (31) étant disposé dans au moins une chambre creuse réalisée entre la couche externe (28) et la couche interne (27) du profilé creux.

9. Module de cabine (8) selon l'une des revendications précédentes, **caractérisé en ce que**, dans au moins une des parois latérales (15, 17) et/ou dans la paroi de fond (16) et/ou dans la paroi de toit (18), est disposée ou réalisée une percée (32) et l'au moins une percée (32) traverse aussi bien la couche externe (28) que la couche interne (27).

10. Module de cabine (8) selon l'une des revendications précédentes, **caractérisé en ce que**, au niveau d'au moins une extrémité frontale (33, 34) de l'élément structurel en forme de corps creux (9), est prévue une disposition de porte et/ou une disposition de fenêtre et/ou une disposition de volet roulant.

11. Module de cabine (8) selon l'une des revendications précédentes, **caractérisé en ce que** la découpe (22), plus particulièrement ses profilés creux, sont constitués d'un matériau métallique et/ou d'une matière plastique et/ou d'une combinaison de ceux-ci.

12. Module de cabine (8) selon la revendication 11, **caractérisé en ce qu'**un métal léger ou un alliage métallique léger est utilisé en tant que matériau métallique.

13. Véhicule automobile (1), plus particulièrement véhicule d'intervention, véhicule d'extinction d'incendie, véhicule communal, véhicule de transport, comprenant un châssis (2), une cabine de conducteur (3) et au moins un module de cabine (8), un train de roulement (4) avec au moins une disposition de roue avant (5) et au moins une disposition de roue arrière (6) et un agrégat d'entraînement (7), **caractérisé en ce que** l'au moins un module de cabine (8) est conçu comme un élément structurel autoporteur (9) selon l'une des revendications précédentes et soit est maintenu au niveau du châssis (2) soit monté sur la cabine du conducteur (3), plus particulièrement par complémentarité de forme.

14. Véhicule automobile (1) selon la revendication 13, **caractérisé en ce qu'**une extension longitudinale de l'élément structurel en forme de corps creux (9) est orientée de façon à s'étendre d'un côté gauche du véhicule vers un côté droit du véhicule, dans le sens de la marche (14).

15. Véhicule automobile (1) selon la revendication 13 ou 14, **caractérisé en ce qu'**à l'intérieur d'au moins une paroi (15 à 18) de l'élément structurel autoporteur (9), entre une couche interne (27) et une couche externe (28) disposée de manière distante par rapport à celle-ci, est disposée ou logée au moins une conduite.
